# EUROPEAN PATENT APPLICATION

(11) **EP 4 102 438 A1**
(43) Date of publication of application: **14.12.2022**
(21) Application number: 20917696.5
(22) Date of filing: 02.10.2020
(51) Int. Cl.: G06Q 30/08, G06Q 50/04

(54) **MANUFACTURING ORDER PLACEMENT SUPPORT DEVICE, METHOD, AND PROGRAM**

(30) Priority: 07.02.2020 JP 2020020036
(71) Applicant: NTT Communications Corporation, Tokyo 100-8019 (JP)
(72) Inventor: AKABORI, Hideaki, Tokyo 100-8019 (JP); KITA, Yujiro, Tokyo 100-8019 (JP); YAMAKAWA, Kazuhiro, Tokyo 100-8019 (JP)
(74) Representative: Gramm, Lins & Partner Patent- und Rechtsanwälte PartGmbB
(86) International application number: PCT/JP2020/037570
(87) International publication number: WO 2021/157131

(57) **Abstract**

To make parts order placement operations efficient to reduce a load on a product manufacturer regarding the parts order placement and to enable bidding opportunities of a parts manufacturer to increase and desired bidding matters to be selected simply and correctly. Generated bidding matter information is disclosed to a plurality of parts manufacturers, and when disclosing the aforementioned bidding matter information, a plurality of items of bidding matter information are edited as a data file for disclosure capable of undergoing sorting processing by each entry therein.

## Description

### FIELD

Embodiments of the present invention relate to manufacturing ordering assistance apparatus, method and program for assisting in operations, for example, of a product manufacturer, to place an order for parts or the like.

### BACKGROUND

For example, when a manufacturer manufactures an industrial product, in general, a designer creates design drawings of the product and the parts used for the product on a design system using computer-aided design (CAD) or the like, and based on the created design drawings, manually creates, as separate documents, a parts list and a manufacturing instruction including the detailed specification information required for manufacturing the parts and the contents of manufacturing instruction. Then, based on the created parts list and manufacturing instruction, a person in charge of procurement selects, for each part, a processor to place an order for manufacturing the part (for example, refer to Patent Literature 1).

### CITATION LIST

### PATENT LITERATURE

Patent Literature 1: Jpn. Pat. Appln. KOKAI Publication No. 2002-189758

### SUMMARY

### TECHNICAL PROBLEM

Now in general, in conventional parts order placement operations, a person in charge of procurement of a product manufacturer selects a parts manufacturer on the basis of its experiences and past order placement results, and places an order after negotiation of the price and the delivery time with the parts manufacturer, detailed adjustment of bidding conditions, and the like. This has caused many processes and much time in the order placement operations and a very high load on the product manufacturer. Moreover, on the part of a parts manufacturer, it cannot obtain opportunities of negotiation such as presentation of a quotation, if not selected by the product manufacturer. This has made it impossible to receive an order even in the presence of an applicable manufacturing resource.

An object of the present invention, which has been conceived in consideration of the aforementioned circumstances, is to provide a technology for making parts order placement operations efficient to reduce a load on a product manufacturer regarding the parts order placement and enabling bidding opportunities of a parts manufacturer to increase and desired bidding matters to be selected simply and correctly.

### SOLUTION TO PROBLEM

In order to solve the aforementioned problem, there is provided a manufacturing ordering assistance apparatus or method according to an aspect of the present invention, with a manufacturing ordering assistance apparatus capable of communicating with a first terminal device used by a product manufacturer and a plurality of second terminal devices used by a plurality of parts manufacturers via a network, including: acquiring design information of a product from the first terminal device; and recognizing information regarding a part forming the product from the acquired design information, and generating manufacturing instruction information required for manufacturing the part for each part based on the recognized information regarding the part. In addition, it includes acquiring information designating a condition regarding bidding for the part from the first terminal device, generating bidding matter information including a plurality of entries regarding the bidding for the part based on the acquired information designating the condition regarding the bidding and the manufacturing instruction information, and disclosing the generated bidding matter information in a state of being browsable on the second terminal devices, wherein the bidding matter information is edited as a data file capable of undergoing sorting processing by at least one entry of the entries.

### ADVANTAGEOUS EFFECTS OF INVENTION

According to an aspect of the present invention, the generated bidding matter information is disclosed to the parts manufacturers as targets. Therefore, the product manufacturer can find the parts manufacturer as the order recipient among the parts manufacturers in a high possibility in a relatively short time. Meanwhile, each parts manufacturer can browse a plurality of items of bidding matter information and obtain opportunities for bidding.

Furthermore, when disclosing the bidding matter information, each of the generated items of bidding matter information is edited as a data file for disclosure which can undergo sorting processing by at least one entry of the entries. Therefore, a parson in charge at each parts manufacturer can perform sorting processing such as rearranging processing and filtering processing by a desired entry in the bidding matter information, and thereby, can efficiently find the bidding matter information that corresponds to the part that can be manufactured at its company or the bidding conditions to make bidding for that.

Namely, according to an aspect of the present invention, there can be provided a technology for making parts order placement operations efficient to reduce a load on a product manufacturer regarding the parts order placement and enabling bidding opportunities of each parts manufacturer to increase and desired bidding matters to be selected simply and correctly.

### BRIEF DESCRIPTION OF THE DRAWINGS

FIG. 1 is a diagram showing an overall configuration of a system including a manufacturing ordering assistance apparatus according to a first embodiment of the present invention.
FIG. 2 is a block diagram showing a hardware configuration of the manufacturing ordering assistance apparatus according to the first embodiment of the present invention.
FIG. 3 is a block diagram showing a software configuration of the manufacturing ordering assistance apparatus according to the first embodiment of the present invention.
FIG. 4 is a flowchart showing the summary of the overall processing procedures and processing contents of manufacturing ordering assistance processing by the manufacturing ordering assistance apparatus shown in FIG. 3.
FIG. 5 is a flowchart showing processing procedures and processing contents of registration of information required for placing an order for parts and disclosure processing of bidding matters in the manufacturing ordering assistance processing shown in FIG. 4.
FIG. 6 is a diagram showing exemplary operations from acquisition of design information to grouping of ordered parts in the registration of information required for order placement and the disclosure processing of bidding matters shown in FIG. 5.
FIG. 7 is a diagram showing exemplary operations of the disclosure processing of bidding matters in the registration of information required for order placement and the disclosure processing of bidding matters shown in FIG. 5.
FIG. 8 is a diagram showing exemplary operations of disclosure processing of bidding matter information in a second embodiment of the present invention.

### DETAILED DESCRIPTION

Hereafter, embodiments according to the present invention will be described with reference to the drawings.

### [First Embodiment]

### (Configuration Example)

### (1) System

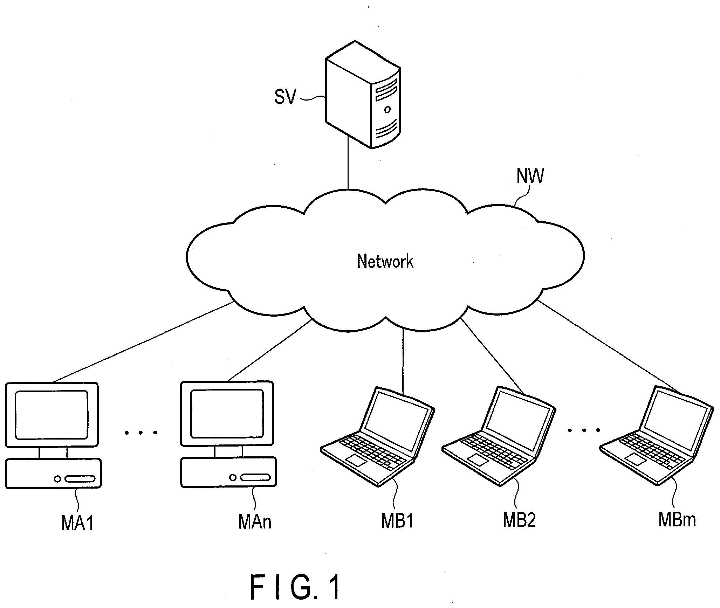

FIG. 1 is a diagram showing a configuration of the overall system including a manufacturing ordering assistance apparatus according to a first embodiment of the present invention.

In this example, the system includes a server computer (hereinafter referred to as server device) SV that operates as the manufacturing ordering assistance apparatus. Further, the server device SV is configured to communicate with first terminal devices MA1 to MAn used by respective product manufacturers (also called set manufacturers) and second terminal devices MB1 to MBm used by respective parts manufacturers (also called parts manufacturing agents or processors) via a network NW.

Each of the first terminal devices MA1 to MAn is formed, for example, of a CAD system or a personal computer for order placement management. Each of the first terminal devices MA1 to MAn is mainly used by a person in charge of procurement at a product manufacturer (set manufacturer) and is used for transmitting design information including an assembly drawing of a product created by a person in charge of design and parts manufacturing information required for manufacturing a plurality of parts forming the aforementioned product to the aforementioned server device SV, and for transmitting information regarding order placement for the parts and the similar information to the aforementioned server device SV.

Each of the second terminal devices MB1 to MBm is formed of a personal computer for order reception management, and is used, for example, by a person in charge of sales at a parts manufacturer (processor) for transmitting company information of the parts manufacturer and manufacturing resource information representing a manufacturing capacity to the server device SV and for browsing bidding matter information disclosed on the server device SV. Notably, the company information may be included in the manufacturing resource information.

Notably, the network NW includes a wide area network having the Internet as its core and access networks for accessing this wide area network, for example. There are used for the access networks, for example, wired and wireless public networks, wired and wireless local area networks (LANs), and cable television (CATV) networks.

### (2) Apparatus

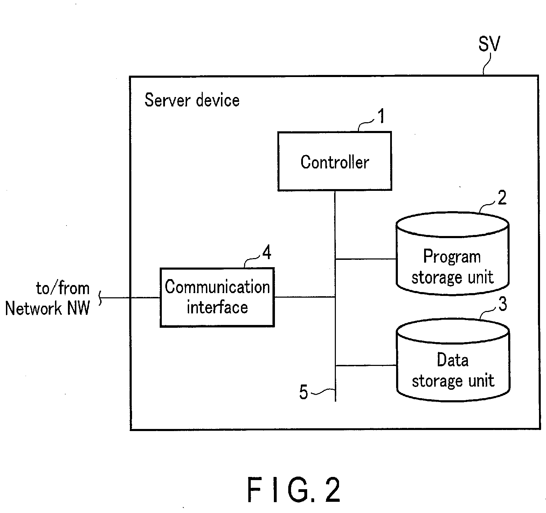

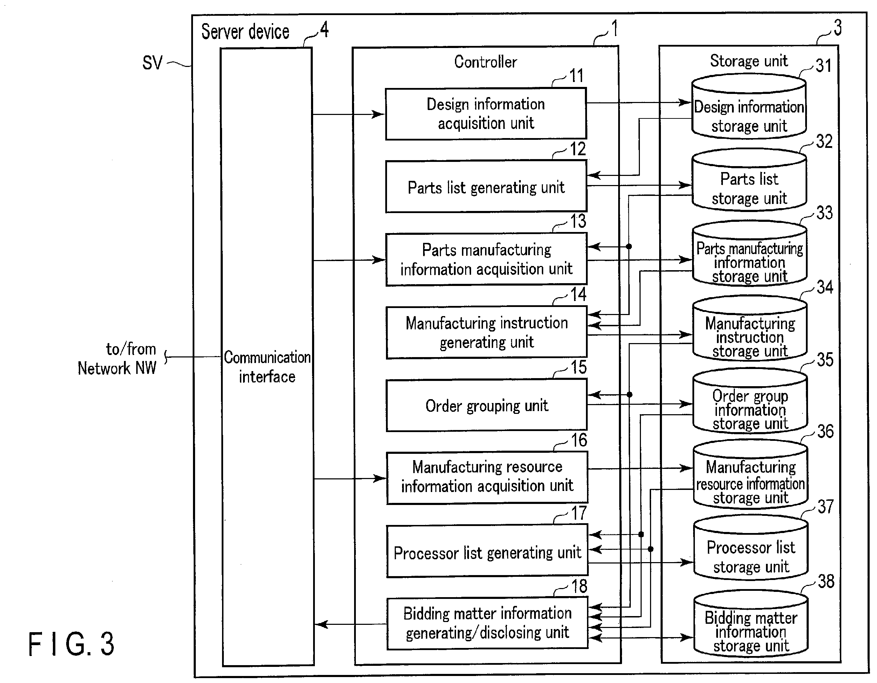

FIG. 2 and FIG. 3 are block diagrams showing a hardware configuration and a software configuration of the server device SV, respectively.

The server device SV includes a controller 1 having a hardware processor such as a central processing unit (CPU), and to this controller 1 via a bus 5, a storage unit having a program storage unit 2 and a data storage unit 3 and a communication interface (communication I/F) 4 are connected.

The communication interface 4 conducts data exchanging with the aforementioned first terminal devices MA1 to MAn and second terminal devices MB1 to MBm via the network NW under the control of the controller 1 and, for example, includes an interface for wired networking.

The program storage unit 2 includes, for example, a combination of a nonvolatile memory capable of performing random access, such as a hard disk drive (HDD) or a solid state drive (SSD), and a nonvolatile memory such as a readonly memory (ROM), as a storage medium, and stores, in addition to middleware such as an operating system (OS), program(s) required for executing various kinds of control processing according to the first embodiment of the present invention.

The data storage unit 3 includes, for example, a combination of a nonvolatile memory capable of performing random access, such as an HDD or an SSD, and a volatile memory such as a random access memory (RAM), as a storage medium, and includes, as main storage areas required for implementing the first embodiment of the present invention, a design information storage unit 31, a parts list storage unit 32, a parts manufacturing information storage unit 33, a manufacturing instruction storage unit 34, an order group information storage unit 35, a manufacturing resource information storage unit 36, a processor list storage unit 37, and a bidding matter information storage unit 38.

The design information storage unit 31 is used for storing design information uploaded from each of the first terminal devices MA1 to MAn of the product manufacturers. The design information includes, for example, data of an assembly drawing created for each product or for each of modules forming the product. The data of the assembly drawing includes, for example, portable document format (PDF) data, two-dimensional (2D) CAD data or three-dimensional (3D) CAD data.

The parts list storage unit 32 is used for storing parts list information which is generated by the controller 1 mentioned later and represents a list of a plurality of parts forming the aforementioned product, associating it with identification information (product ID) of the product.

The parts manufacturing information storage unit 33 is used for storing information required for manufacturing the parts described in the aforementioned parts list information, associating it with identification information (parts ID) of the parts and the product ID. The information required for manufacturing the parts includes information designating the contents of manufacturing instruction and specifications, and is transmitted from each of the first terminal devices MA1 to MAn of the product manufacturers.

The manufacturing instruction storage unit 34 is used for storing parts manufacturing instruction information including all the items of information required for instructing the parts manufacturer (processor) to manufacture the parts, associating it with the parts ID and the product ID. The parts manufacturing instruction information is generated by the controller 1 mentioned later.

The order group information storage unit 35 is used for storing information representing a group of ordered parts. This information representing a group of ordered parts is also generated by the controller 1 mentioned later.

The bidding matter information storage unit 38 is used for storing the bidding matter information including information required for making biding for the parts on an order group-by-order group basis or on a part-by-part basis. This bidding matter information is also generated by the controller 1 mentioned later.

The controller 1 includes, as processing functions according to the first embodiment of the present invention, a design information acquisition unit 11, a parts list generating unit 12, a parts manufacturing information acquisition unit 13, a manufacturing instruction generating unit 14, an order grouping unit 15, a manufacturing resource information acquisition unit 16, a processor list generating unit 17, and a bidding matter information generating/disclosing unit 18 which functions as a bidding matter processing unit. Any of these processing units 11 to 18 are implemented by causing a hardware processor of the controller 1 to execute a program stored in the program storage unit 2.

The design information acquisition unit 11 receives design information of a product uploaded from each of the first terminal devices MA1 to MAn of the product manufacturers via the communication interface 4. Then, the design information acquisition unit 11 performs processing of storing the received design information mentioned above, associating it with the product ID, in the aforementioned design information storage unit 31. Notably, the design information may be associated with identification information of the product manufacturer (set manufacturer) as a requestor.

The parts list generating unit 12 reads data of the assembly drawing for each product or for each of the modules forming the product from the aforementioned design information storage unit 31, and recognizes component parts from the data of the assembly drawing. The recognition of component parts is performed, for example, based on prestored solid shapes and dimensions (sizes) of parts and the like. Then, the parts list generating unit 12 perform processing of generating the parts list information representing a list of parts in which a part name, a parts grouping, a part quantity and a model number (for example, a suffix) are described for each of the recognized parts mentioned above, and storing the generated parts list information, associating it with the identification information of the corresponding product, in the parts list storage unit 32.

The parts manufacturing information acquisition unit 13 transmits a request for requesting providing information required for manufacturing, for each of the parts described in the aforementioned parts list information, to the relevant one of the first terminal devices MA1 to MAn for the product manufacturers as the requestor. Then, the parts manufacturing information acquisition unit 13 performs processing of receiving the information required for manufacturing sent from the relevant one of the first terminal devices MA1 to MAn in response to the aforementioned request and storing the received information required for manufacturing the part, associating it with the identification information of the part, in the parts manufacturing information storage unit 33. The information required for manufacturing the part includes, for example, the contents of manufacturing instruction and specification information. The contents of manufacturing instruction include, for example, information designating a processing method and a processing process. The specification information includes information designating a material, a finishing level, quality and the like.

The manufacturing instruction generating unit 14 describes, in a manufacturing instruction format stored in the data storage unit 3, the contents of manufacturing instruction and the specification information mentioned above stored in the parts manufacturing information storage unit 33 for each part, furthermore, attaches a file of 3D drawing data and 2D drawing data of the part thereto and adds data representing points to be considered relating the processing process thereto thereby to generate manufacturing instruction information for each part. Then, the manufacturing instruction generating unit 14 performs processing of storing the generated manufacturing instruction information mentioned above, associating it with the part ID and the product ID, in the manufacturing instruction storage unit 34.

The order grouping unit 15 differentiates parts that are the same or similar within a predetermined range in predetermined conditions for determining the degree of similarity between parts, for example, the material, the outer shape and dimensions, and the processing method of the part, based on the aforementioned manufacturing instruction information stored in the manufacturing instruction storage unit 34. Then, for all the parts forming the product, the order grouping unit 15 performs processing of grouping the same or similar ones in the aforementioned conditions on the basis of the aforementioned differentiation results and storing each grouped parts group as an order group in the order group information storage unit 35.

The manufacturing resource information acquisition unit 16 performs processing of receiving the company information and the manufacturing resource information of the parts manufacturer which are transmitted from the relevant one of the second terminal devices MB1 to MBm for the parts manufacturer (processor) and storing the received company information and manufacturing resource information mentioned above, associating them with the identification information (parts manufacturer ID) of the parts manufacturer, in the manufacturing resource information storage unit 36.

The processor list generating unit 17 receives information designating the bidding conditions transmitted from the relevant one of the first terminal devices MA1 to MAn for the product manufacturer (set manufacturer). Then, the processor list generating unit 17 performs processing of selecting parts manufacturers (processors) each having a manufacturing capacity that satisfies the aforementioned bidding conditions, based on the received information designating the bidding conditions mentioned above and the aforementioned manufacturing resource information stored in the manufacturing resource information storage unit 36, to generate a list of those and storing the generated list of the processors, associating it with the part ID or the order group ID, in the processor list storage unit 37.

The bidding matter information generating/disclosing unit 18 performs processing of generating, for each part or for each parts group included in the order group, the bidding matter information of the part and storing it, associating it with the part ID or the order group ID, in the bidding matter information storage unit 38. Each item of bidding matter information is generated by extracting information to be disclosed to the parts manufacturers, for example, from the aforementioned manufacturing instruction information stored in the manufacturing instruction storage unit 34 and further adding, to the extracted information mentioned above, the bidding conditions and the order placement information designated by the product manufacturer (set manufacturer). The bidding matter information includes a plurality of entries. Examples of the entries include items of information representing a part name, a parts grouping, a processing method, a material, a desired quantity, a desired manufacturing charge, a desired delivery time, bidding essential conditions and bidding desired conditions.

Moreover, the bidding matter information generating/disclosing unit 18 sets each item of bidding matter information mentioned above stored in the bidding matter information storage unit 38 to the state where a person in charge at each parts manufacturer (processor) can perform sorting, searching and selecting operations thereon for each entry. This can be realized, for example, by editing the items of bidding matter information generated for each part or for each order group as a data file which can be executed by an application program having sorting functions such as rearranging and filtering on data for each entry.

Then, in response to a request from each of the second terminal devices MB1 to MBm of the parts manufacturers (processors), the bidding matter information generating/disclosing unit 18 sets the aforementioned bidding matter information to be browsable by a person in charge at the parts manufacturer. Processing of the browsing includes, as mentioned above, processing of rearranging data of the items of bidding matter information for each entry, filtering of extracting items of bidding matter information that satisfy predetermined conditions for each entry, and the like.

### (Exemplary Operations)

Next, exemplary operations of the server device SV configured as above are described.

### (I) Overall Operation of Manufacturing Ordering Assistance Processing

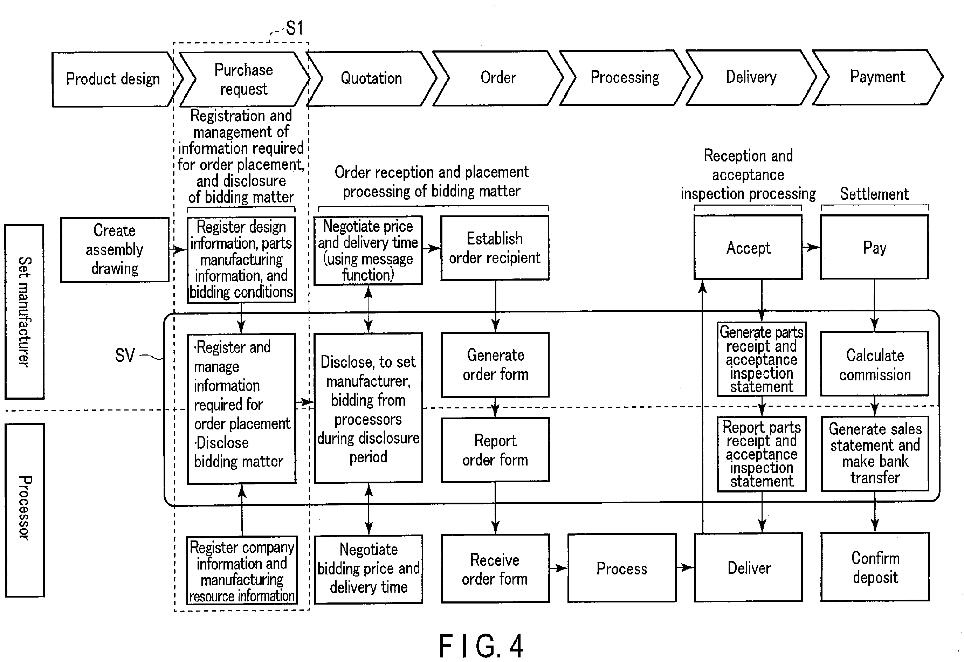

FIG. 4 is a flowchart showing the summary of overall processing procedures and processing contents of manufacturing ordering assistance processing by the server device SV.

In the order of product design, a purchase request S1, a quotation, an order, processing, delivery, and payment in time series, the server device SV performs assistance operations for those. Notably, while in this embodiment, there is exemplarily described a case where the server device SV performs assistance operations only for the purchase request, the quotation, the order, the delivery, and the payment, the server device SV may perform assistance operations for the product design and the processing.

In the assistance operation for the purchase request S1, there are performed processing of receiving the design information, the parts manufacturing information, the bidding conditions and the order placement information sent from the first terminal devices MA1 to MAn of the product manufacturers (set manufacturers) to perform unified registration and management of these items of information according to order placement, and based on the aforementioned items of information, processing of generating the bidding matter information to disclose it to the parts manufacturers (processors). In the aforementioned unified registration and management processing of information, there is also performed processing of grouping ordered parts. The unified registration and management of information according to order placement, the grouping of ordered parts, and the disclosing processing of the bidding matter information mentioned above are described in detail using specific examples later.

In the assistance operation of the quotation, there is performed processing for receiving the bidding information with respect to the aforementioned bidding matter information disclosed to the parts manufacturers (processors) from the processors and presenting this bidding information to the product manufacturers (set manufacturers) afterward to assist the parts manufacturers and the product manufacturers in negotiating the price, the delivery time and the like.

In the assistance operation for the order, there is performed processing of receiving establishment information of an order recipient from the product manufacturer (set manufacturer) and generating an order form on the basis of the bidding matter information generated in the aforementioned assistance for the purchase request S1 and the quotation results representing the price and/or the delivery time which they have agreed on in the aforementioned assistance for the quotation. Then, there is performed processing of reporting information of the generated order form mentioned above and information of the manufacturing instruction generated in the aforementioned assistance for the purchase request to the parts manufacturer (processor).

In the assistance operation for the delivery, the parts are delivered to the product manufacturer (set manufacturer) from the parts manufacturer (processor), and there is performed processing of generating, when delivery acknowledgement notification is received from the product manufacturer, a receipt and an acceptance inspection statement for the parts and reporting them to the parts manufacturer.

In the assistance operation for the payment, there is performed processing of calculating, when payment notification is received from the aforementioned product manufacturer (set manufacturer), a commission, and in addition, generating a sales statement to make a bank transfer for the charge to the parts manufacturer (processor).

### (II) Unified Registration and Management of Information According to Order Placement and Grouping of Ordered Parts

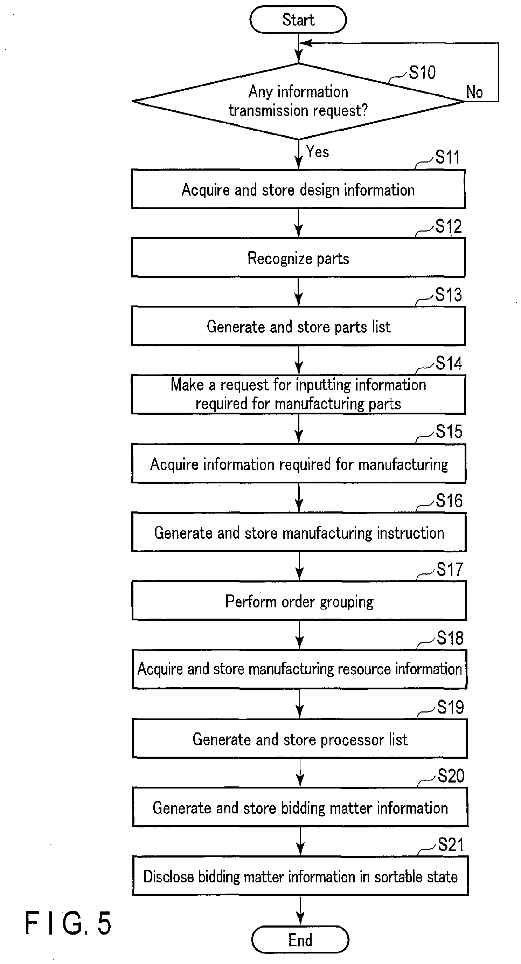

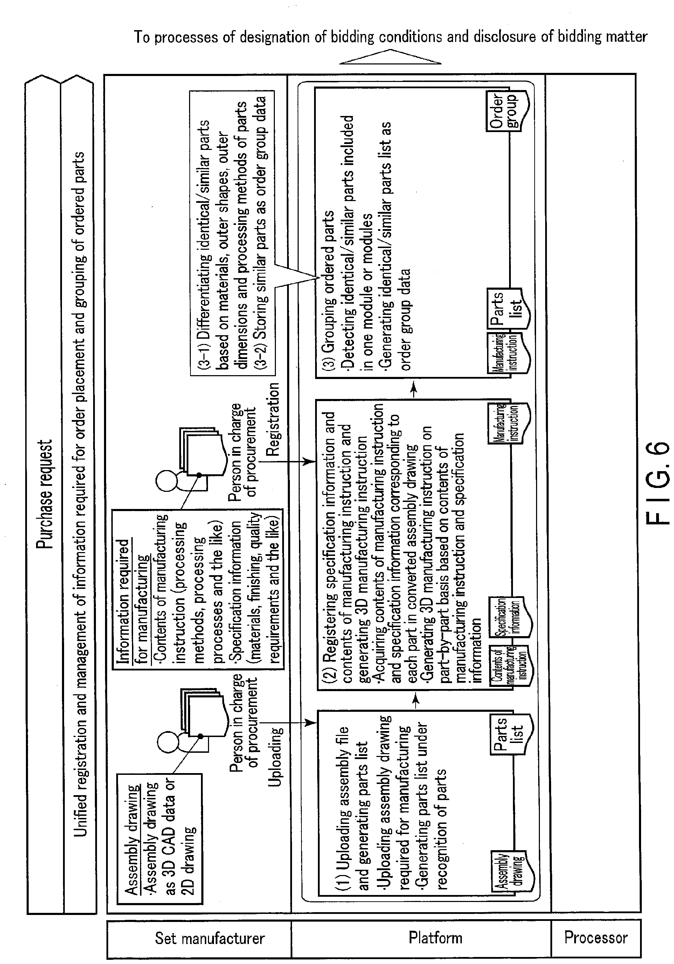

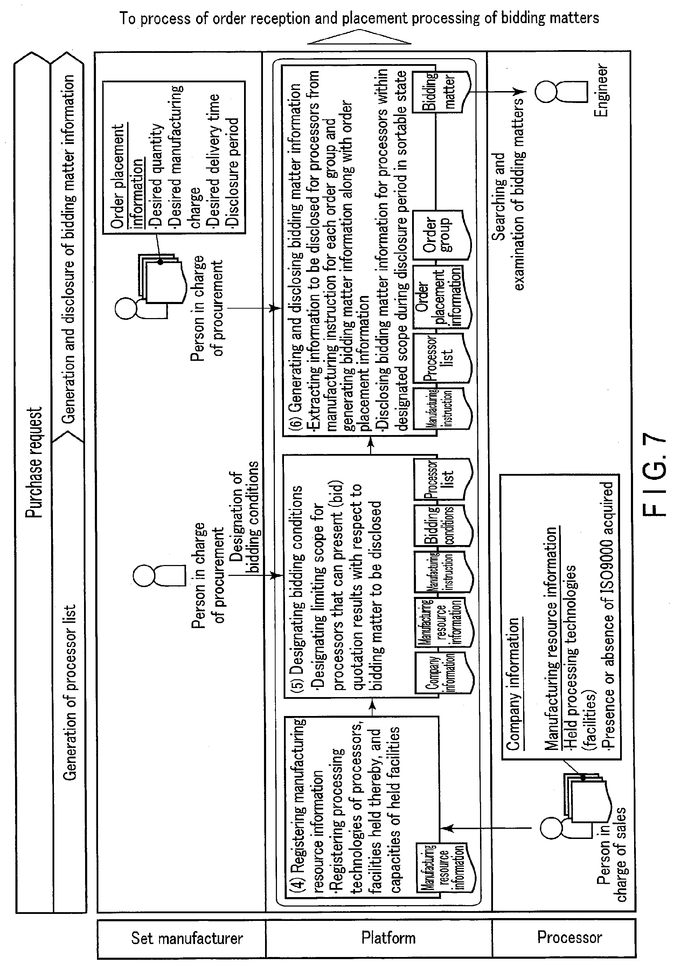

FIG. 5 is a flowchart showing processing procedures and processing contents of the assistance operation for the purchase request S1 by the server device SV. FIG. 6 is a diagram showing exemplary operations from acquisition of the design information to grouping of the ordered parts in the aforementioned purchase request S1, and FIG. 7 is a diagram showing exemplary operations from acquisition of the manufacturing resource information to generation and disclosure of the bidding matter information subsequently to the aforementioned order grouping.

### (1) Acquisition of Design Information and Generation of Parts List

At the product manufacturer (set manufacturer), a person in charge of design by way of example creates the assembly drawing of a product with a CAD system. While the assembly drawing is created, for example, as 3D data, it may be 2D data or both of those may be created. Moreover, at the product manufacturer, the person in charge of design also generates information required for manufacturing the parts forming the aforementioned product. The information required for manufacturing is formed of information designating the contents of manufacturing instruction, and information designating specifications, for example. For the information designating the contents of manufacturing instruction, there are designated, for example, processing methods and processing processes. The information designating specifications is information designating materials, finishing methods and the like, for example. Moreover, for the information designating specifications, there are designated, for example, the material, the finishing level, the quality and the like.

At the product manufacturer (set manufacturer), when requesting order placement for the aforementioned designed parts forming the product, a person in charge of procurement by way of example first sends a transmission request for design information to the server device SV using the first terminal MA1, and subsequently, transmits (uploads) data of the aforementioned assembly drawing along with attribute information of the product to the server device SV.

### (1-1) Acquisition of Design Information

In step S10, the server device SV is monitoring the aforementioned transmission request under the control of the design information acquisition unit 11. When the aforementioned transmission request comes from the first terminal device MA1 of the product manufacturer (set manufacturer) in this state, in step S11, the design information acquisition unit 11 receives the aforementioned design information and the attribute information of the product subsequently transmitted from the first terminal device MA1 via the communication interface 4, and stores the received design information, associating it with identification information (product manufacturer ID) of the product manufacturer as the requester and the identification information (product ID) of the product which are included in the attribute information simultaneously received, in the design information storage unit 31.

Notably, depending on the product manufacturer (set manufacturer), there is a case where it uses a different kind and/or version of application of the CAD system. Therefore, the server device SV preferably requests the product manufacturer to transmit the data of the assembly drawing in a form of intermediate file.

### (1-2) Generation of Parts List Information

Subsequently, the server device SV generates parts list information as follows on the basis of the aforementioned design information under the control of the parts list generating unit 12.

Namely, in step S12, the parts list generating unit 12 reads the design information from the aforementioned design information storage unit 31, and first, recognizes a solid shape for each component part, for example, using pattern matching on the basis of the data of the assembly drawing included in the design information. Then, the parts list generating unit 12 differentiates component parts on the basis of the recognized solid shapes mentioned above. Notably, when the assembly drawing data included in the design information is 2D CAD drawing data, the parts list generating unit 12 converts 2D CAD figure data into 3D CAD drawing data, and after that, performs the aforementioned recognition processing on the component parts.

Next, in step S13, the parts list generating unit 12 associates the differentiated component parts mentioned above with respective part IDs thereby to make a list of those, and associates information representing the listed parts list with the product ID to store it in the parts list storage unit 32.

### (2) Generation of Parts Manufacturing Instruction (2-1) Acquisition of Information Required for Manufacturing Parts

Next, in step S14, the server device SV transmits a request for requesting information required for manufacturing the individual component parts on the basis of the aforementioned parts list information stored in the parts list storage unit 32 to the first terminal device MA1 of the product manufacturer (set manufacturer) as the requestor from the communication interface 4 under the control of the parts manufacturing information acquisition unit 13.

Notably, while the parts manufacturing information acquisition unit 13 may transmit the request for all the component parts in this stage, when the 3D CAD drawing data by way of example acquired as the design information is supplemented with the manufacturing instruction information and the specification information, it may select parts that lack information required for manufacturing themselves and transmit the request only for the selected parts. For example, since there is occasionally a case where the 3D CAD drawing data is not supplemented with outer dimensions and the like of convex shapes, it selects such parts and transmits the request for those.

In response to this, a person in charge of procurement by way of example of the product manufacturer (set manufacturer) transmits the information required for manufacturing the individual component parts, for example, information indicating the contents of manufacturing instruction designating the processing methods and the processing processes and the specification information designating the materials and the required finishing levels and quality from the first terminal device MA1 in response to the aforementioned request.

Under the control of the parts manufacturing information acquisition unit 13, in step S15, the server device SV receives the information indicating the contents of manufacturing instruction for the parts and the specification information which are transmitted from the aforementioned first terminal device MA1 via the communication interface 4, and associates the information indicating the contents of manufacturing instruction for the parts and the specification information which are thus received with the individual part IDs to store those temporarily in the parts manufacturing information storage unit 33.

### (2-2) Generation of Manufacturing Instruction for Parts

Subsequently, in step S16, the server device SV describes the information indicating the contents of manufacturing instruction and the specification information mentioned above which are thus acquired for each part, for example, in a manufacturing instruction format stored in the data storage unit 3 under the control of the manufacturing instruction generating unit 14. In addition, the server device SV generates for each part the manufacturing instruction information by attaching a file of its 3D image (along with its 2D image as needed) and further adding data indicating points to be considered according to processing. Then, the manufacturing instruction generating unit 14 associates the generated manufacturing instruction information mentioned above with the product ID to store it in the manufacturing instruction storage unit 34.

The manufacturing instruction information includes, for example, data respectively indicating the part name, the part number, the part quantity, the material, the outer dimensions, the geometrical tolerance, the hole standards, the bending angle tolerance, the processing method, the processing process, the 2D image data, the 3D image data, and data indicating the quality requirements and the points to be considered regarding processing.

### (3) Grouping of Ordered Parts

### (3-1) Differentiation of Parts

Next, in step S17, for all the parts forming the product, the server device SV determines whether or not there are any parts that are the same or similar within a predetermined range in the material, the outer shape, the outer dimensions and the processing method on the basis of the aforementioned manufacturing instruction information stored in the manufacturing instruction storage unit 34 under the control of the order grouping unit 15.

### (3-2) Generation of Order Placement Group

Subsequently, in step S17, based on the results of the aforementioned determination, the order grouping unit 15 groups all the parts forming the product mentioned above into sets of ones that are the same or similar within a predetermined range in the material, the outer shape, the outer dimensions and the processing method. Then, the order grouping unit 15 sets each grouped parts group to an order group for the parts to store it, attaching a group ID thereto, in the order group information storage unit 35.

Notably, when the product includes a plurality of modules, the ordered parts may be grouped with all the parts forming these modules being as targets or may be grouped on a module-by-module basis.

### (III) Generation and Disclosure of Bidding Matter Information

### (4) Acquisition of Manufacturing Resource Information

In step S18, first, the server device SV receives, for the individual parts manufacturers (processors), their company information and their manufacturing resource information from the second terminal devices MB1 to MBm of the parts manufacturers under the control of the manufacturing resource information acquisition unit 16. Then, the manufacturing resource information acquisition unit 16 associates the received items of company information and items of manufacturing resource information with the respective parts manufacturer IDs to store them in the storage unit 36. The manufacturing resource information includes the processing technologies that the processor has, that is, held facilities and their capacities, and the situation of IS09000 acquired.

Notably, examples of methods considered for acquiring the manufacturing resource information and the like include a method of sending requests from the server device SV with all the parts manufacturers (processors) that can be order recipients being as targets, and acquiring the respective items of company information and items of manufacturing resource information transmitted from the second terminal devices MB1 to MBm of the parts manufacturers in forms of responding the requests.

### (5) Processor List

The processor list generating unit 17 receives information representing bidding conditions for the parts manufacturers (processors) from the first terminal devices MA1 to MAn of the product manufacturers (set manufacturers). The bidding conditions include, as bidding essential conditions or preferable conditions, the company evaluation (rank) as viewed from the product manufacturer, the number of transactions, and the presence or absence of IS09000 acquired, for example.

Then, in step S19, for each part or for each parts group included in the order group, the processor list generating unit 17 extracts parts manufacturers that have the manufacturing capacity satisfying the aforementioned bidding conditions on the basis of the manufacturing resource information acquired from the parts manufacturers (processors) and the aforementioned information representing the bidding conditions designated by the product manufacturers (set manufacturers) to make a list of those, and stores the generated processor list, associating it with the part ID or the order group ID, in the processor list storage unit 37.

For example, when the aforementioned bidding conditions include the "presence or absence of ISO9000 acquired" as a bidding essential condition, the parts manufacturers (processors) in the manufacturing resource information of which the "ISO9000 acquired" is described are extracted and a list of them is made.

### (6) Generation and Disclosure of Bidding matter Information

### (6-1) Generation of Bidding Matter Information

The server device SV first acquires the order placement information from each of the first terminal devices MA1 to MAn of the product manufacturers (set manufacturers) under the control of the bidding matter information generating/disclosing unit 18. The order placement information includes the desired quantity, the desired manufacturing charge, the desired delivery time, and the disclosure period.

Subsequently, in step S20, for each part or for each parts group included in the order group, the bidding matter information generating/disclosing unit 18 extracts information to be disclosed to the parts manufacturers, for example, from the aforementioned manufacturing instruction information stored in the manufacturing instruction storage unit 34, combines the extracted information with the bidding conditions and the order placement information designated by the aforementioned product manufacturer (set manufacturer), and thereby, generates bidding matter information corresponding to the aforementioned part or parts group. As a result, there is generated the bidding matter information, for example, including information representing the part name, the parts grouping, the processing method, the material, the desired quantity, the desired manufacturing charge, the desired delivery time, the bidding essential conditions, and the bidding desired conditions.

### (6-2) Disclosure of Bidding Matter Information

In step S21, the server device SV discloses the aforementioned bidding matter information stored in the bidding matter information storage unit 38 on the basis of the aforementioned processor list stored in the processor list storage unit 37 in the state where the parts manufacturers (processors) that are described in the processor list can browse the bidding matter information under the control of the bidding matter information generating/disclosing unit 18. In this stage, the bidding matter information generating/disclosing unit 18 sets all the items of bidding matter information generated for the individual parts or for the individual parts groups included in the order group to the state where persons in charge at the parts manufacturers can perform sorting processing thereon for each entry.

For example, using a general-purpose application program having sorting processing functions such as rearrangement processing and filtering processing on data, each of the aforementioned items of bidding matter information is edited as a data file which can be executed by the aforementioned application program.

Then, when there is generated the aforementioned data file for disclosing the bidding matter information, the server device SV reads the processor list corresponding to the part or the order group from the aforementioned processor list storage unit 37 under the control of the bidding matter information generating/disclosing unit 18. Then, the server device SV transmits, for example, a mail in which a uniform resource locator (URL) indicating the place where the aforementioned bidding matter information is stored is described toward the relevant ones of the second terminal devices MB1 to MBm for the parts manufacturers (processors) that are described in the processor list. Namely, the server device SV recommends the bidding matter information thereto.

When each of the parts manufacturers (processors) which receive the aforementioned mail accesses the URL in this state, in response to the access to the aforementioned URL, the server device SV downloads the aforementioned data file for disclosing the bidding matter information to the relevant one of the second terminal devices MB1 to MBm for the parts manufacturer as the access source. Here, the data file for disclosing the aforementioned bidding matter information is the data file which can undergo sorting processing such as rearrangement processing and filtering processing. Therefore, the person in charge at the parts manufacturer (processor) can properly perform sorting operation by a desired entry in the aforementioned bidding matter information, and thereby, can relatively easily find the bidding matter information that corresponds to the part or the parts group that can be manufactured at its company to make bidding for that.

For example, there is performed filtering processing, for example, with the part name or the type among the entries in the bidding matter information to select the bidding matter information that corresponds to the desired part, and furthermore, there is performed filtering processing with the processing method to select the bidding matter information that corresponds to the processing method that can be processed with a manufacturing facility at its company. Then, there is performed bidding for the selected bidding matter information.

### (Functions and Advantageous Effects)

As mentioned above, according to the first embodiment, in the server device SV, there is generated the bidding matter information for each part or for each parts group included in the order group on the basis of the manufacturing instruction information generated for each part and the bidding conditions and the order placement information which are designated by the product manufacturer (set manufacturer), and the generated bidding matter information is disclosed to the plurality of parts manufacturers (processors).

Accordingly, in the server device SV, the bidding matter information is automatically generated and the bidding matter information is to be disclosed to the plurality of parts manufacturers (processors). Therefore, the product manufacturer (set manufacturer) does not need to generate the bidding matter information by itself, and this can reduce a load regarding the parts order placement operation. Moreover, since the bidding matter information is to be disclosed to the plurality of parts manufacturers, the parts manufacturer as the order recipient can be found in a high possibility in a relatively short time. Meanwhile, each parts manufacturer can browse a plurality of items of bidding matter information and obtain opportunities for bidding.

Moreover, in the first embodiment, the items of bidding matter information generated for the parts or for the parts groups included in the order group are edited as a data file which can undergo sorting processing by individual entries, and are disclosed to the parts manufacturers (processors). Therefore, even when many items of bidding matter information are disclosed, a person in charge at each parts manufacturer can efficiently find items of bidding matter information that its company can do manufacturing for among those items of bidding matter information.

Furthermore, in the first embodiment, items of manufacturing resource information are beforehand acquired from a plurality of parts manufacturers (processors), and based on the acquired items of manufacturing resource information and the bidding essential conditions designated by the product manufacturer (set manufacturer), parts manufacturers that satisfy the bidding essential conditions are selected from the plurality of parts manufacturers to generate the processor list of them. For example, when the "ISO9000 acquired" is designated as a bidding essential condition, parts manufacturers that have the "ISO9000 acquired" are selected to generate the processor list of them. The bidding matter information is disclosed to the parts manufacturers described in the generated processor list.

Accordingly, parts manufacturers (processors) each possibly to be the order recipient for parts manufacturing can be beforehand narrowed down to the manufacturers that at least satisfy the bidding essential conditions. Therefore, the person in charge of procurement of the product manufacturer can efficiently perform operation of selecting the optimum processor from the plurality of parts manufacturers having made bidding.

### [Second Embodiment]

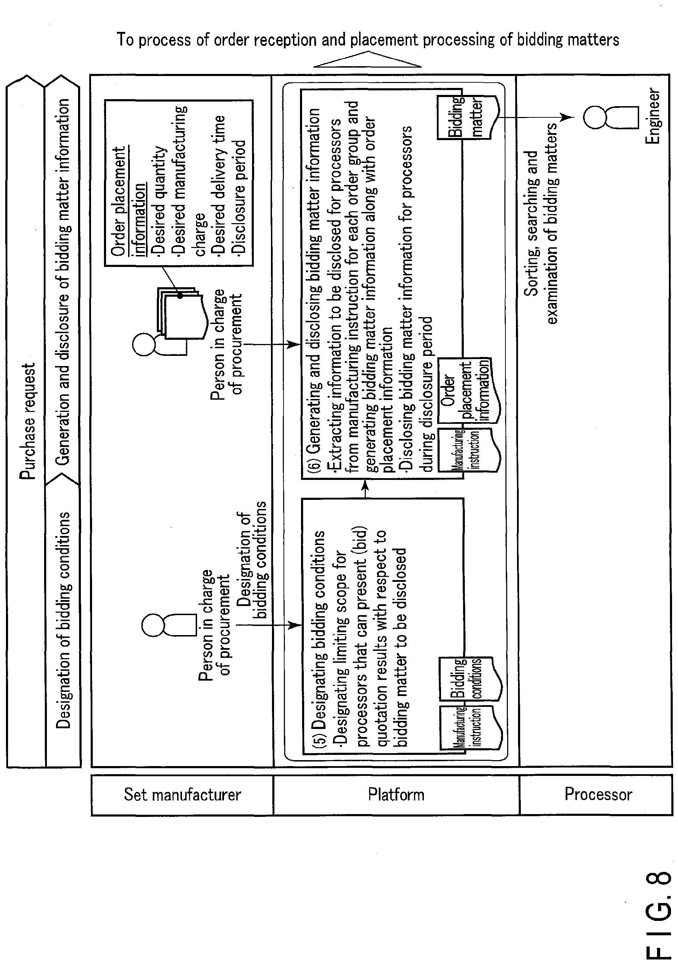

FIG. 8 is a diagram for explaining operations of disclosure processing of bidding matter information according to a second embodiment of the present invention. Notably, unified registration and management processing of information according to order placement in the second embodiment is similar to that described for the first embodiment with FIG. 6, and its description is herein omitted.

In item (5), a server device SV operating as the platform acquires bidding conditions from each of first terminal devices MA1 to MAn of the product manufacturers (set manufacturers). The bidding conditions include, as bidding essential conditions or preferable conditions, the company evaluation (rank) as viewed from the product manufacturer, the number of transactions, and the presence or absence of ISO9000 acquired, for example.

Next, in item (6), the server device SV first acquires order placement information from the relevant one of the first terminal devices MA1 to MAn for the product manufacturer (set manufacturer) under the control of the bidding matter information generating/disclosing unit 18 functioning as a bidding matter processing unit. The order placement information includes the desired quantity, the desired manufacturing charge, the desired delivery time and the disclosure period.

Subsequently, in step S20, for each part or for each parts group included in the order group, the bidding matter information generating/disclosing unit 18 extracts information to be disclosed to the parts manufacturers, for example, from the aforementioned manufacturing instruction information stored in the manufacturing instruction storage unit 34, combines the extracted information with the bidding conditions and the order placement information designated by the aforementioned product manufacturer (set manufacturer), and thereby, generates bidding matter information corresponding to the aforementioned part or parts group. As a result, there is generated the bidding matter information including, as entries, items of information representing the part name, the parts grouping, the processing method, the material, the desired quantity, the desired manufacturing charge, the desired delivery time, the bidding essential conditions and the bidding desired conditions, for example.

Moreover, the bidding matter information generating/disclosing unit 18 sets all the generated items of bidding matter information to the state where persons in charge at the parts manufacturers (processors) can perform sorting processing for each entry. For example, using a general-purpose application program having sorting functions such as rearranging processing and filtering processing on data, each of the aforementioned items of bidding matter information is edited as a data file for disclosure which can be executed by the aforementioned application program.

Next, the server device SV discloses the aforementioned bidding matter information stored in the bidding matter information storage unit 38 to unspecified large number of parts manufacturers (processors) as targets under the control of the bidding matter information generating/disclosing unit 18. Examples of disclosing methods used include a method of using advertising media, and in the case where items of address information of second terminal devices MB1 to MBm are beforehand acquired from the parts manufacturers, a method of transmitting, using the address information, an announcement message for bidding to the second terminal devices MB1 to MBm.

When a person in charge at the parts manufacturer (processor), for example, viewing the aforementioned advertisement or announcement message accesses the designated URL in this state, in response to the aforementioned access, the server device SV downloads the data file for disclosing the aforementioned bidding matter information to the relevant one of the second terminal devices MB1 to MBm for the parts manufacturer as the access source.

In this state, as mentioned above, the data file for disclosing the aforementioned bidding matter information is a data file that can undergo sorting processing such as rearranging processing and filtering processing.
Therefore, even when many items of bidding matter information are included in the data file for disclosure, a person in charge at each parts manufacturer (processor) can efficiently find items of bidding matter information that its company can do manufacturing for among those items of bidding matter information.

As mentioned above, in the second embodiment, the bidding matter information generated for each part or for each parts group included in the order group is disclosed to unspecified large number of parts manufacturers (processors) as targets. Therefore, the product manufacturer (set manufacturer) can find the parts manufacturer as the order recipient among such many parts manufacturers in a high possibility in a relatively short time. Meanwhile, each parts manufacturer can browse the plurality of items of bidding matter information and obtain opportunities for bidding.

Further, in the second embodiment, when disclosing the bidding matter information, the plurality of items of bidding matter information generated for individual parts or for individual parts groups included in the order groups are edited as a data file for disclosure that can undergo sorting processing. Therefore, a person in charge at each parts manufacturer (processor) can perform sorting processing such as rearranging processing and filtering processing by a desired entry in the bidding matter information, and thereby, can efficiently find the bidding matter information that corresponds to the part that can be manufactured at its company or the bidding conditions to make bidding for that.

### [Other Embodiments]

(1) For the first embodiment, a list of processors that satisfy the bidding conditions is generated, and based on this processor list, the bidding matter information is disclosed only to the aforementioned processors which satisfy the bidding conditions. The present invention however is not limited to this but the bidding matter information may be disclosed to the listed parts manufacturer as targets by making a list of parts manufacturers (processors) by selecting those that satisfy both of the bidding conditions and manufacturing enabling requirements defined by the manufacturing resource information in consideration of the manufacturing enabling requirements in addition to the bidding information.
(2) For the first embodiment, when disclosing the bidding matter information, a mail in which the URL as the access destination to the aforementioned bidding matter information is described is transmitted to the relevant ones of the second terminal devices MB1 to MBm for the parts manufacturers (processors) as disclosure targets, and these parts manufacturers are enabled to browse the disclosed matter information by accessing the URL. The present invention however is not limited to this but unspecified large number of parts manufacturers may be notified that the bidding matter information is disclosed via advertising media.
(3) In addition, there can also be implemented in various modes a configuration and an installation place of a manufacturing ordering assistance apparatus, and the processing contents and the processing procedures of acquisition processing the design information of a product and the information required for manufacturing the parts, generation processing of the parts list and the manufacturing instruction information, grouping processing of the ordered parts, acquisition processing of the manufacturing resource information, generation processing of the list of processors, generation processing of the bidding matter information, and disclosure processing of the bidding matter information, without departing from the spirit of the present invention. Moreover, there may be employed any type and the like of sorting function included in the data file for disclosing the bidding matter information.

Embodiments of the present invention have been described in detail as above, and the description above is merely illustration of the present invention in all respects. It is needless to say that they may be improved or modified in various manners without departing from the scope of the present invention. In other words, a specific configuration in accordance with an embodiment may be properly employed in implementing the present invention.

In short, the present invention is not limited to any of each embodiment above as it is but can be embodied by modifying components of those in its implementation phase without departing from its spirit. Moreover, various inventions may be formed by properly combining a plurality of components disclosed in each embodiment above. For example, some components may be eliminated from all the components shown for any of each embodiment. Furthermore, components of different embodiments may be properly combined.

### REFERENCE SIGNS LIST

- SV: Server device
- MA1 to MAn: First terminal device of product manufacturers
- MB1 to MBm: Second terminal device of parts manufacturers
- NW: Network
- 1: Controller
- 2: Program storage unit
- 3: Data storage unit
- 4: Communication interface
- 5: Bus
- 11: Design information acquisition unit
- 12: Parts list generating unit
- 13: Parts manufacturing information acquisition unit
- 14: Manufacturing instruction generating unit
- 15: Order grouping unit
- 16: Manufacturing resource information acquisition unit
- 17: Processor list generating unit
- 18: Bidding matter information generating/disclosing unit
- 31: Design information storage unit
- 32: Parts list storage unit
- 33: Parts manufacturing information storage unit
- 34: Manufacturing instruction storage unit
- 35: Order group information storage unit
- 36: Manufacturing resource information storage unit
- 37: Processor list storage unit
- 38: Bidding matter information storage unit

## Claims

1. A manufacturing ordering assistance apparatus capable of communicating with a first terminal device used by a product manufacturer and a plurality of second terminal devices used by a plurality of parts manufacturers via a network, the apparatus comprising:
an acquisition unit configured to acquire design information of a product from the first terminal device;
a manufacturing instruction information generating unit configured to recognize information regarding a part forming the product from the acquired design information and generate manufacturing instruction information required for manufacturing the part for each part based on the recognized information regarding the part; and
a bidding matter processing unit configured to acquire information designating a bidding condition for the part from the first terminal device, generate bidding matter information including a plurality of entries regarding bidding for the part based on the acquired information designating the bidding condition and the manufacturing instruction information, and disclose the generated bidding matter information in a state of being browsable on the second terminal devices, wherein
the bidding matter processing unit is configured to edit the bidding matter information as a data file capable of undergoing sorting processing by at least one entry of the entries.

2. The manufacturing ordering assistance apparatus according to claim 1, wherein the bidding matter processing unit is configured to edit the bidding matter information as a data file capable of undergoing rearranging processing or filtering processing on information by at least one entry of the plurality of entries.

3. The manufacturing ordering assistance apparatus according to claim 1, further comprising:
a manufacturing capacity information acquisition unit configured to acquire information regarding manufacturing capacities which the parts manufacturers have from the second terminal devices; and
a first selection unit configured to select, based on the information designating the condition regarding the bidding and the information regarding the manufacturing capacities which the parts manufacturers have, the parts manufacturer having the manufacturing capacity that satisfies the condition regarding the bidding from the parts manufacturers, wherein
the bidding matter processing unit is configured to disclose the bidding matter information in a state of being browsable on the second terminal device that corresponds to the parts manufacturer selected by the first selectin unit.

4. The manufacturing ordering assistance apparatus according to claim 1, further comprising:
a manufacturing capacity information acquisition unit configured to acquire information regarding manufacturing capacities which the parts manufacturers have from the second terminal devices; and
a second selection unit that selects, based on the manufacturing instruction information and the information regarding the manufacturing capacities which the parts manufacturers have, the parts manufacturer that is capable of manufacturing the parts from the parts manufacturers, wherein
the bidding matter processing unit is configured to disclose the bidding matter information in a state of being browsable on the second terminal device that corresponds to the parts manufacturer selected by the second selection unit.

5. The manufacturing ordering assistance apparatus according to any one of claims 2 to 4, wherein the bidding matter processing unit is configured to send an announcement message for the bidding to the second terminal device of the selected parts manufacturer.

6. A manufacturing ordering assistance method performed by a manufacturing ordering assistance apparatus capable of communicating with a first terminal device used by a product manufacturer and a plurality of second terminal devices used by a plurality of parts manufacturers via a network, the method comprising:
acquiring design information of a product from the first terminal device;
recognizing information regarding a part forming the product from the acquired design information, and generating manufacturing instruction information required for manufacturing the part for each part based on the recognized information regarding the part; and
acquiring information designating a condition regarding bidding for the part from the first terminal device, generating bidding matter information including a plurality of entries regarding the bidding for the part based on the acquired information designating the condition regarding the bidding and the manufacturing instruction information, and disclosing the generated bidding matter information in a state of being browsable on the second terminal devices, wherein
the disclosing comprises editing the bidding matter information as a data file capable of undergoing sorting processing by at least one entry of the entries.

7. A program for causing a hardware processor included in the manufacturing ordering assistance apparatus according to any one of claims 1 to 5 to execute processing of the units included in the manufacturing ordering assistance apparatus.
